# EUROPÄISCHE PATENTSCHRIFT

(11) **EP 2 502 098 B1**
(45) Veröffentlichungstag und Bekanntmachung des Hinweises auf die Patenterteilung: **25.06.2014**
(21) Anmeldenummer: 11703820.8
(22) Anmeldetag: 26.01.2011
(51) Int. Cl.: G01V 8/20

(54) **LICHTVORHANG**
LIGHT CURTAIN
RIDEAU PHOTOÉLECTRIQUE

(30) Priorität: 06.03.2010 DE 102010010510
(43) Veröffentlichungstag der Anmeldung: 26.09.2012
(73) Patentinhaber: Leuze electronic GmbH + Co. KG, 73277 Owen/Teck (DE)
(72) Erfinder: PATZ, Jürgen, 72660 Beuren (DE)
(74) Vertreter: Ruckh, Rainer Gerhard
(86) Internationale Anmeldenummer: PCT/EP2011/000319
(87) Internationale Veröffentlichungsnummer: WO 2011/110256

(56) Entgegenhaltungen:
- EP-A1- 0 889 332
- EP-A1- 1 394 504
- EP-A2- 1 296 161
- EP-A2- 2 237 077
- DE-A1- 3 606 594

## Beschreibung

Derartige Lichtvorhänge dienen generell zur Erfassung von Objekten in einem flächigen Überwachungsbereich. Zur Objekterfassung werden mehrere Sender-Empfänger-Paare eingesetzt, wobei jedes Sender-Empfänger-Paar einen Sendelichtstrahlen emittierenden Sender und einen Empfangslichtstrahlen empfangenden Empfänger aufweist.

Bei einem nach dem Einweg-Lichtschranken-Prinzip arbeitenden Lichtvorhang ist an einem ersten Rand des Überwachungsbereichs eine Sendereinheit mit einer Anordnung von Sender vorgesehen. Am zweiten, dem ersten Rand gegenüber liegend angeordneten Rand des Überwachungsbereichs befindet sich eine Empfängereinheit mit einer Anordnung von Empfängern, deren Anzahl der Anzahl der Sender entspricht. Bei freiem Überwachungsbereich treffen die von einem Sender emittierten Sendelichtstrahlen als Empfangslichtstrahlen auf den zugeordneten Empfänger des jeweiligen Sender-Empfänger-Paares.

Bei einem Reflex-Lichtvorhang befindet sich an einem Rand des Überwachungsbereichs eine Sender-Empfänger-Einheit, die mit den Sendern, Empfängern und zugeordneten Elektronikeinheiten alle aktiven Elemente des Lichtvorhangs enthält. An dem zweiten, gegenüberliegend angeordneten Rand des Überwachungsbereichs befindet sich ein Reflektor als passive Komponente. Der Sender und der Empfänger jedes Sender-Empfänger-Paares sind nebeneinander liegend in der Sender-Empfänger-Einheit angeordnet, wobei dem Sender eine erste Linse zur Strahlformung der vom Sender emittierten Sendelichtstrahlen nachgeordnet ist. Dem Empfänger ist eine zweite Linse vorgeordnet, um aus dem Überwachungsbereich kommende Empfangslichtstrahlen auf den Empfänger zu fokussieren. Bei freiem Überwachungsbereich treffen die vom Sender eines Sender-Empfänger-Paares emittierten Sendelichtstrahlen ungehindert auf den Reflektor und werden von diesem als Empfangslichtstrahlen auf den zugeordneten Empfänger geführt, wobei die Sendelichtstrahlen und Empfangslichtstrahlen in Abstand zueinander verlaufend im Überwachungsbereich geführt sind.

Die Objekterfassung erfolgt sowohl bei einem nach dem Lichtstrahlen-Prinzip arbeitenden Lichtvorhang als auch bei einem Reflex-Lichtvorhang derart, dass in einer Auswerteeinheit registriert wird, ob der Strahlengang der Sendelichtstrahlen und Empfangslichtstrahlen wenigstens eines Sender-Empfänger-Paares unterbrochen ist.

Die DE 36 06 594 A1 betrifft einen Unfallschutzlichtvorhang bestehend aus zwei Lichtsende-Empfangsanordnungen mit jeweils einer Lichtstrahlschwenkvorrichtung, wie einem Spiegelrad oder einem Dreh- oder Schwingspiegel, welche einen auftreffenden, scharf gebündelten Lichtstrahl, insbesondere einen Laserlichtstrahl, innerhalb eines vorbestimmten Winkelbereiches eine periodische Abtastbewegung ausführen lässt, damit ein Überwachungslichtstrahl eine vorbestimmte Überwachungsebene entsprechend periodisch überstreicht, an deren von der Lichtstrahleintrittsseite abgewandter Seite beziehungsweise abgewandten Seiten ein oder mehrere Retroreflektoren angeordnet sind, welche das auftreffende Licht in sich zurück zu der Lichtstrahlschwenkvorrichtung lenken, von wo das Empfangslicht zu einem Photowandler geschickt wird, der über eine angeschlossene Auswerteelektronik eine Maschinensteuerung derart beaufschlagt. Bei Unterbrechung des Lichtstrahls wird durch ein in die Überwachungsebene eingebrachtes Hindernis die Arbeitsmaschine zumindest solange abgeschaltet, wie sich das Hindernis in der Überwachungsebene befindet.

Die EP 1 394 504 A1 betrifft eine Lichtschranke oder ein Lichtgitter, welche zwei Gehäuse aufweist, in welchen die Lichtsender sowie Lichtempfänger angeordnet sind. Außerdem ist eine Einrichtung zum Ausrichten der beiden Gehäuse vorgesehen. Zu diesem Zweck ist in dem einen Gehäuse ein Ausrichtlichtsender und in dem anderen Gehäuse ein Spiegel angeordnet, welcher den Richtstrahl in sich oder nahezu in sich zurückreflektiert.

Die EP 0 889 332 A1 betrifft eine Lichtschranke mit integrierter Ausrichthilfe zum gegenseitigen geometrischen Ausrichten zweier einander gegenüberliegenden, jeweils ein oder mehrere Spender und Empfänger aufweisenden Leisten. Die Ausrichthilfe umfasst zwei zueinander gegenläufige, in Abstand voneinander angeordnete Richtstrahlen. Mit dieser können alle Freiheitsgrade der Leisten überprüft und eingestellt werden.

Die EP 1 296 161 A2 betrifft eine optoelektronische Vorrichtung zur Zutrittsabsicherung, welche auf der einen Seite der Überwachungsstrecke eine aktive Sender-/Empfänger-/Versorgungseinheit und auf der gegenüberliegenden Seite eine passive Reflektoreinheit aufweist. Dabei wird das Licht von einem Sendeelement kommend durch die Überwachungsstrecke geführt und in einer Umlenkeinheit in mehrere räumlich getrennte Teilstrahlen zerlegt. Diese Teilstrahlen werden durch die Überwachungsstrecke zurückgeführt und von mehreren Empfangselementen empfangen und ausgewertet.

Die EP 2 237 077 A2 betrifft eine Lichtschrankenvorrichtung, umfassend einen ersten Arm, an welchem eine Sendeeinrichtung für Licht und eine Empfängereinrichtung angeordnet sind, einen zweiten Arm, an welchem eine Reflektoreinrichtung für Licht angeordnet ist, und eine Einstelleinrichtung, über welche ein Abstand des zweiten Arms zu dem ersten Arm und/oder eine Winkelposition des zweiten Arms zu dem ersten Arm feststellbar einstellbar ist.

Der Erfindung liegt die Aufgabe zugrunde, einen Lichtvorhang bereit zu stellten, bei welchem bei geringem konstruktiven Aufwand eine sichere und zuverlässige Objektdetektion gewährleistet ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße Lichtvorhang dient zur Erfassung von Objekten in einem Überwachungsbereich und umfasst eine Sender-Empfänger-Einheit an einem Rand des Überwachungsbereichs und einen Reflektor an einem zweiten Rand des Überwachungsbereichs. Die Sender-Empfänger-Einheit weist eine Anordnung von Sender-Empfänger-Paaren mit jeweils einem Sendelichtstrahlen emittierenden Sender und Empfangslichtstrahlen empfangenden Empfängern auf. Die Strahlrichtungen der Sendelichtstrahlen sind unveränderlich und verlaufen parallel zueinander. Bei freiem Überwachungsbereich treffen die Sendelichtstrahlen jedes Senders auf den Reflektor und werden von dort als Empfangslichtstrahlen auf den zugeordneten Empfänger geführt. Bei einem Objekteingriff ist im Überwachungsbereich der Strahlengang der Sendelichtstrahlen und Empfangslichtstrahlen wenigstens eines Sender-Empfänger-Paares zumindest teilweise unterbrochen. Die Sendelichtstrahlen und Empfangslichtstrahlen jedes Sender-Empfänger-Paares verlaufen koaxial im Überwachungsbereich.

Der erfindungsgemäße Lichtvorhang bildet einen Reflex-Lichtvorhang, bei welchem in der Sender-Empfänger-Einheit, die an einem Rand des Überwachungsbereichs angeordnet ist, sämtliche aktiven, elektronischen und optoelektronischen Komponenten des Lichtvorhangs integriert sind, während der Reflektor an dem gegenüber liegenden Rand des Überwachungsbereichs eine rein passive Komponente des Lichtvorhangs bildet.

Dadurch ergibt sich generell ein geringer Verdrahtungsaufwand des erfindungsgemäßen Lichtvorhangs. Dabei ist insbesondere vorteilhaft, dass die in der gemeinsamen Sender-Empfänger-Einheit integrierten Sender und Empfänger von einer zentralen Einheit gesteuert und aktiviert werden können, das heißt die Synchronisierung des Betriebs der Sender und Empfänger kann von dieser zentralen Einheit auf elektrischem Weg erfolgen und so einfach und störsicher durchgerührt werden.

Ein wesentlicher Vorteil des erfindungsgemäßen Lichtvorhangs wird durch die koaxiale Strahlführung der Sendelichtstrahlen und Empfangslichtstrahlen jedes Sender-Empfänger-Paares erhalten. Zunächst ergibt sich dadurch ein verringerter konstruktiver Aufwand, da die die Sendelichtstrahlen des Senders und die Empfangslichtstrahlen des Empfängers eines Sender-Empfänger-Paares über eine gemeinsame Linse geführt werden können, wobei diese Linse sowohl zur Strahlformung der Sendelichtstrahlen als auch zur Fokussierung der Empfangslichtstrahlen auf den Empfänger dient.

Zudem wird durch die koaxiale Strahlführung der Senderlichtstrahlen und Empfanglichtstrahlen jedes Sender-Empfänger-Paares die Detektionssicherheit des Lichtvorhangs erhöht. Anders als bei zweilinsigen Systemen mit versetzt zueinander laufenden Sendelichtstrahlen und Empfangslichtstrahlen entsteht im Nachbereich unmittelbar vor der Sender-Empfänger-Einheit kein Totbereich, innerhalb dessen keine Objektdetektion möglich ist, das heißt durch die koaxiale Strahlführung können Objekte auch dicht vor der Sender-Empfänger-Einheit sicher erfasst werden.

Ein weiterer Vorteil besteht darin, dass bei einer hinreichend kleinen Dimensionierung der Strahldurchmesser der Sendelichtstrahlen und Empfangslichtstrahlen und deren koaxiale, Strahlführung mit hoher Sicherheit eine gegenseitige Beeinflussung von Sendelichtstrahlen benachbarter Sender vermieden werden kann. Dadurch ist es möglich, die Sendersteuerung so vorzunehmen, dass zumindest jeweils eine Untermenge mehrerer Sender-Empfänger-Paare immer gleichzeitig aktiviert wird. Im Gegensatz zu einer zyklischen Einzelaktivierung des Sender-Empfänger-Paares ergibt sich somit eine kleinere Zykluszeit der Aktivierung der Sender-Empfänger-Paare und damit eine höhere Scangeschwindigkeit bei der Aktivierung der Sender-Empfänger-Paare, was zu kürzeren Ansprechzeiten des Lichtvorhangs führt, so dass auch schnell durch den Lichtvorhang bewegte Objekte sicher erfasst werden können.

Die koaxiale Strahlführung lässt sich vorteilhaft dadurch erreichen, dass die Sendelichtstrahlen des Senders und die Empfangslichtstrahlen des Empfängers eines Sender-Empfänger-Paares über einen Strahlteiler geführt werden.

Ohne weitere Umlenkelemente sind dann der Sender und der Empfänger eines Sender-Empfänger-Paares in verschiedenen Ebenen orientiert, so dass der Sender und Empfänger auf verschiedenen Leiterplatten platziert werden müssen.

Besonders vorteilhaft kann ein weiteres Umlenkelement zur Umlenkung der Sendelichtstrahlen oder Empfangslichtstrahlen sein, so dass dann der Sender und Empfänger in einer Ebene orientiert sind und damit auf einer gemeinsamen Leiterplatte angeordnet sein können, was den Aufbau des Lichtvorhangs weiter vereinfacht.

In einer besonders vorteilhaften Ausführungsform der Erfindung ist im Strahlengang der Sendelichtstrahlen jedes Senders diesem ein erstes Polarisationsfilter unmittelbar nachgeordnet, und im Strahlengang der Empfangslichtstrahl jedes Empfängers diesem ein zweites Polarisationsfilter unmittelbar vorgeordnet.

Dadurch wird eine polarisationsabhängige Objekterfassung ermöglicht, wodurch die Detektionssicherheit des erfindungsgemäßen Lichtvorhangs erhöht wird. Dabei wird ausgenutzt, dass der Reflektor am Rand des Überwachungsbereichs ein anderes Polarisationsverhalten für die auftreffenden Objekte aufweist als in den Überwachungsbereich eindringende Objekte. So können insbesondere auch spiegelnde Objekte oder auch transparente Objekte im Überwachungsbereich sicher detektiert werden.

In einer besonders vorteilhaften Ausgestaltung der Erfindung sind die Sender und Empfänger eines Sender-Empfänger-Paares Bestandteile eines Sender-Empfänger-Moduls. Die Sender-Empfänger-Module bilden kaskadierbare Einheiten.

Alternativ ist jedem Sender-Empfänger-Paar ein Sender-Empfänger-Modul zugeordnet, welches dem Sender und Empfänger des Sender Empfänger-Paares zugeordnete Optikelemente enthält.

Durch den so ausgebildeten modularen Aufbau des Lichtvorhangs kann dieser variabel mit einer unterschiedlichen Anzahl von Sender-Empfänger-Paaren ausgebildet werden, so dass auf einfache Weise eine applikationspezifische Ausführung des Lichtvorhangs ermöglicht wird.

Besonders vorteilhaft bilden die Sender-Empfänger-Module aneinander steckbare Einheiten.

Für die so ausgebildeten Sender-Empfänger-Module sind zweckgemäßig übergreifende Elektronikeinheiten vorgesehen, an welchen die Sender und Empfänger aller Sender-Empfänger-Module anschließbar sind.

Weiterhin können die einzelnen Sender-Empfänger-Module über eine Bandleitung elektrisch miteinander verbunden sein. Die Kontaktierung der Sender-Empfänger-Module mit der Bandleitung kann vorteilhaft über Schneid-Klemmverbindungen erfolgen.

Dadurch ergibt sich ein besonders variabler Aufbau des Lichtvorhangs.

Gemäß einer weiteren Ausgestaltung der Erfindung sind die den Sendern zugeordneten ersten Polarisationsfilter und die den Empfängern zugeordneten Polarisationsfilter jeweils Bestandteil einer Polarisationsfilterplatte.

Weiterhin sind die den Sendern und Empfängern des Sender-Emfpänger-Paares zugeordneten Strahlteiler Bestandteil einer Strahlteilerplatte.

Durch die Zusammenfassung der einzelnen Polarisationsfilter und Strahlteiler in jeweils einem gemeinsamen Bauteil ergibt sich ein besonders rationeller, kostengünstiger Aufbau des Lichtvorhangs.

Die Erfindung wird im Folgenden anhand der Zeichnungen erläutert. Es zeigen:
- Figur 1:: Schematische Darstellung eines Ausführungsbeispiels des erfindungsgemäßen Lichtvorhangs mit einer Mehrfachanordung von Sender-Empfänger-Paaren in einer Sender-Empfänger-Einheit.
- Figur 2:: Beispiel einer Anordnung eines Sender-Empfänger-Paares mit zugeordneten Optikelementen für den Lichtvorhang gemäß Figur 1.
- Figur 3:: Variante der Anordnung gemäß Figur 2.
- Figur 4:: Schematische Darstellung von Sender-Empfänger-Modulen zur Ausbildung eines Lichtvorhangs.
- Figur 5:: Konstruktive Variante für den Lichtvorhang gemäß Figur 1.

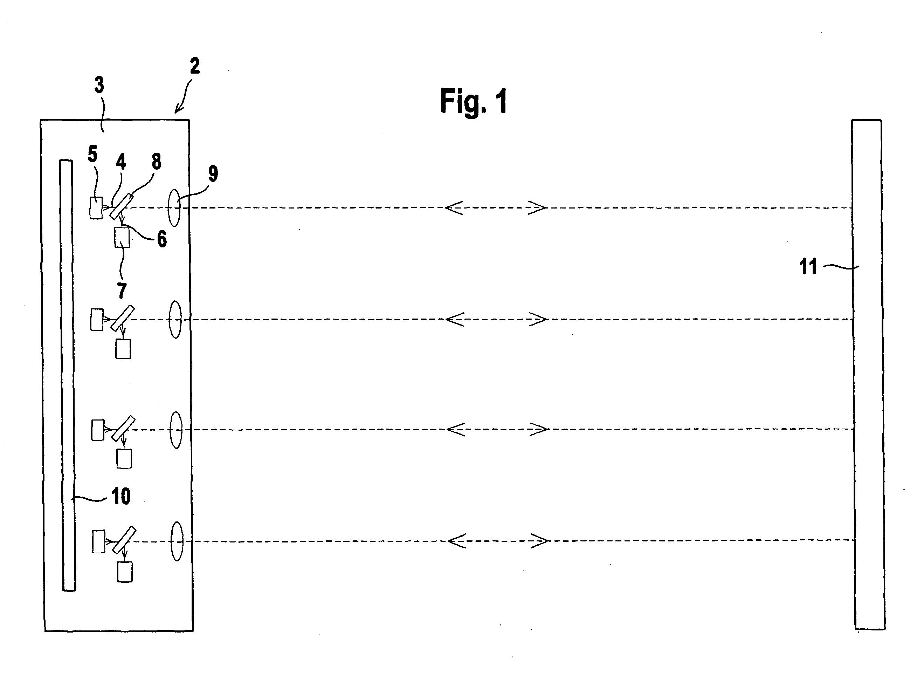

Figur 1 zeigt schematisch den Aufbau eines Ausführungsbeispiels des erfindungsgemäßen Lichtvorhangs 1. Der Lichtvorhang 1 dient zur Erfassung von Objekten in einem flächigen Überwachungsbereich. An einem ersten Rand des Überwachungsbereichs ist eine Sender-Empfänger-Einheit 2 des Lichtvorhangs 1 angeordnet. In einem Gehäuse 3 der Sender-Empfänger-Einheit 2 befinden sich sämtliche aktiven, das heißt elektronischen und optikelektronischen Komponenten des Lichtvorhangs 1. In der Sender-Empfänger-Einheit 2 ist eine Anzahl von Sender-Empfänger-Paaren angeordnet, die jeweils aus einem Sendelichtstrahlen 4 emittierenden Sender 5 und einem Empfangslichtstrahlen 6 empfangenden Empfänger 7 bestehen. Im vorliegendem Fall weist der Lichtvorhang 1 vier Sender-Empfänger-Paare auf. Generell kann auch eine andere Anzahl von Sender-Empfänger-Paaren vorgesehen sein.

Jedem Sender-Empfänger-Paar ist ein Strahlteiler 8 zugeordnet, über den die Sendelichtstrahlen 4 des Senders 5 und die Empfangslichtstrahlen 6 des Empfängers 7 geführt sind, so dass diese im Überwachungsbereich koaxial verlaufen. Dabei werden die koaxial verlaufenden Sendelichtstrahlen 4 und Empfangslichtstrahlen 6 des Sender-Empfänger-Paares über eine gemeinsame Linse 9 geführt, die sowohl zur Strahlformung der Sendelichtstrahlen als auch zur Fokussierung der Empfängerlichtstrahlen 6 auf den Empfänger 7 dient.

Weiterhin ist in der Sender-Empfänger-Einheit 2 eine Auswerteeinheit 10 vorgesehen, die von einem oder mehreren Prozessoren gebildet ist. Die Auswerteeinheit 10 dient zur Auswertung der Empfangssignale an den Ausgängen der Empfänger 7, wobei in der Auswerteeinheit 10 in Abhängigkeit der Empfangssignale ein Objektfeststellungssignal generiert wird. Weiterhin dient die Auswerteeinheit 10 auch zur Ansteuerung, das heißt Aktivierung und Deaktivierung der Sender 5 und Empfänger 7.

Die einzelnen Sender-Empfänger-Paare können einzeln zyklisch nacheinander aktiviert werden. Da durch die koaxiale Strahlführung, verbunden mit kleinem Öffnungswinkel der Linse 9 eine gegenseitige Beeinflussung der einzelnen Sendelichtstrahlen 4 auf optischem Weg ausgeschlossen oder zumindest stark reduziert werden kann, können auch mehrere Sender 5 immer gleichzeitig aktiviert werden. Im vorliegenden Fall können beispielsweise immer das erste und dritte sowie das zweite und vierte Sender-Empfänger-Paar gleichzeitig aktiviert werden.

An dem zweiten, dem ersten Rand des Überwachungsbereichs gegenüberliegenden Rand des Überwachungsbereichs befindet sich ein Reflektor 11 als rein passive Komponente des Lichtvorhangs 1. Der Reflektor 11 ist vorteilhaft als Retroreflektor ausgebildet.

Bei freiem Überwachungsbereich sind, wie aus Figur 1 ersichtlich, die Sendelichtstrahlen 4 aller Sender 5 auf den Reflektor geführt und werden von dort als Empfangslichtstrahlen 6 auf den Empfänger des jeweiligen Sender-Empfänger-Paares geführt.

Bei einem Objekteingriff in dem Überwachungsbereich wird der Strahlengang der Sendelichtstrahlen 4 und Empfangslichtstrahlen 6 wenigstens eines der Sender-Empfänger-Paares unterbrochen.

Der Lichtvorhang 1 kann gemäß einer ersten Ausführungsform als binär schaltender Sensor ausgebildet sein. In diesem Fall wird in der Auswerteeinheit 10 als Objektfeststellungssignal ein binäres Schaltsignal generiert. Die Schaltzustände geben an, ob sich ein Objekt im Überwachungsbereich befindet oder nicht. Ein Objekt gilt dabei als erkannt, wenn der Strahlengang der Sendelichtstrahlen 4 und Empfangslichtstrahlen 6 wenigstens eines der Sender-Empfänger-Paare unterbrochen ist. Ein derartiger Lichtvorhang 1 kann insbesondere im Bereich der Sicherheitstechnik eingesetzt werden. Zur Erfüllung der hierbei geltenden Sicherheitsanforderungen kann die Auswerteeinheit 10 einen redundanten Aufbau aufweisen, beispielsweise in Form zweier gegenseitig zyklisch überwachender Prozessoren.

Der Lichtvorhang 1 kann gemäß einer zweiten Ausführungsform auch als messender Lichtvorhang 1 ausgebildet sein. In diesem Fall können als Objektfeststellungssignal Objektgrößen, Objektkonturen und/oder Objektpositionen bestimmt werden.

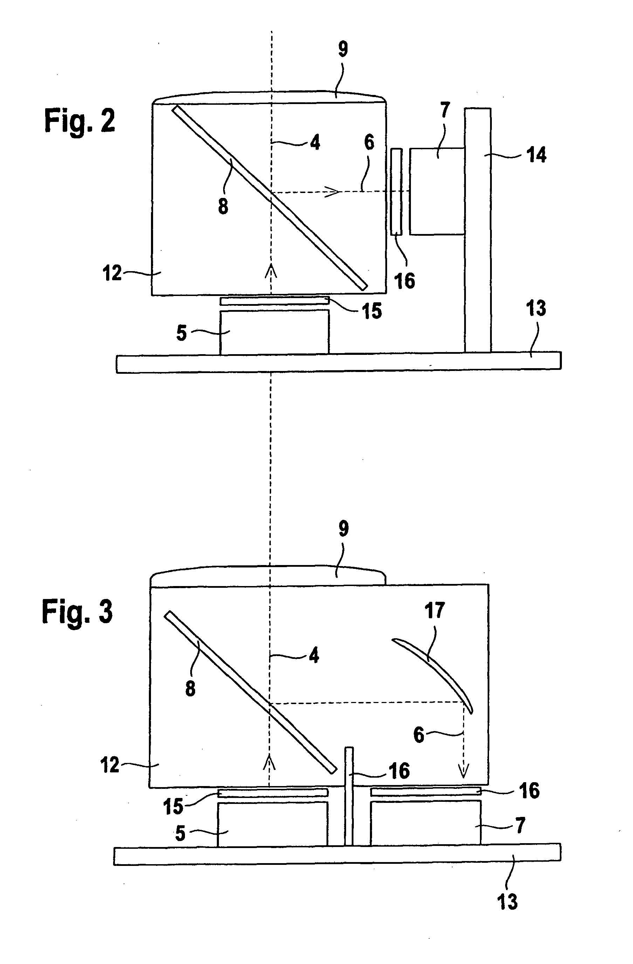

Figur 2 zeigt ein Sender-Empfänger-Paar mit zugeordneten Optikelementen für den Lichtvorhang 1 gemäß Figur 1. Die Linse 9 und der Strahlteiler 8 als dem Sender 5 und Empfänger 7 zugeordnete Optikelemente sind in einem Optikgehäuse 12 integriert. Der Sender 5 grenzt an den Boden des Optikgehäuses 12 an, während der Empfänger an eine Seitenwand des Optikgehäuses anschließt, wobei die optischen Achsen der Sender 5 und Empfänger 7 in einem Winkel von 90° zueinander orientiert sind. Der Sender 5 sitzt auf einer ersten Leiterplatte 13 auf, der Empfänger ist auf einer zweiten Leiterplatte 14 angeordnet. Die um 90° gegeneinander gedreht angeordneten Leiterplatten 13, 14 erstrecken sich über die gesamte Länge des Gehäuses 3 des Lichtvorhangs 1, so dass die Sender aller Sender-Empfänger-Paare auf der Leiterplatte 13 angeordnet sind und entsprechend die Empfänger 7 aller Sender-Empfänger-Paare auf der Leiterplatte 14 angeordnet sind.

Wie aus Figur 2 ersichtlich, ist dem Sender 5 im Strahlengang der Sendelichtstrahlen 4 ein Polarisationsfilter 15 unmittelbar nachgeordnet. Ebenso ist im Strahlengang der Empfangslichtstrahlen 6 ein Polarisationsfilter 16 unmittelbar vorgeordnet. Die Polarisationsrichtungen der Polarisationsfilter 15, 16 sind vorzugsweise um 90° gegeneinander gedreht. Durch die Polarisationsfilter 15, 16 wird die Detektionssicherheit des Lichtvorhangs 1 erhöht, da insbesondere auch durchsichtige Objekte, die beispielsweise aus Klarglas bestehen und auch spiegelnd reflektierende Objekte sicher erkannt und vom Reflektor unterschieden werden können. Die Polarisation oder Sendelichtstrahlen 4 wird nämlich bei Auftreffen auf den Reflektor geändert, nicht jedoch bei Auftreffen auf die genannten Objekte, so dass dadurch die Objekte sicher erkannt werden können.

Figur 3 zeigt eine Variante der Anordnung gemäß Figur 2. Im Unterschied zur Anordnung gemäß Figur 2 sind bei der Anordnung gemäß Figur 3 der Sender 5 und der Empfänger 7 als Sender-Empfänger-Paar in einer Ebene liegend auf einer Leiterplatte 13 angeordnet. Um die Empfangslichtstrahlen 6 auf den Empfänger 7 zu führen, weist das Optikgehäuse 12 neben der Linse 9 und dem Strahlteiler 8 ein Umlenkelement 17 zur Umlenkung der Empfangslichtstrahlen 6 auf. Weiterhin ist zur optischen Trennung zwischen Sender 5 und Empfänger 7 eine Optikfalle 18 in Form eines lichtundurchlässigen Wandelements vorgesehen.

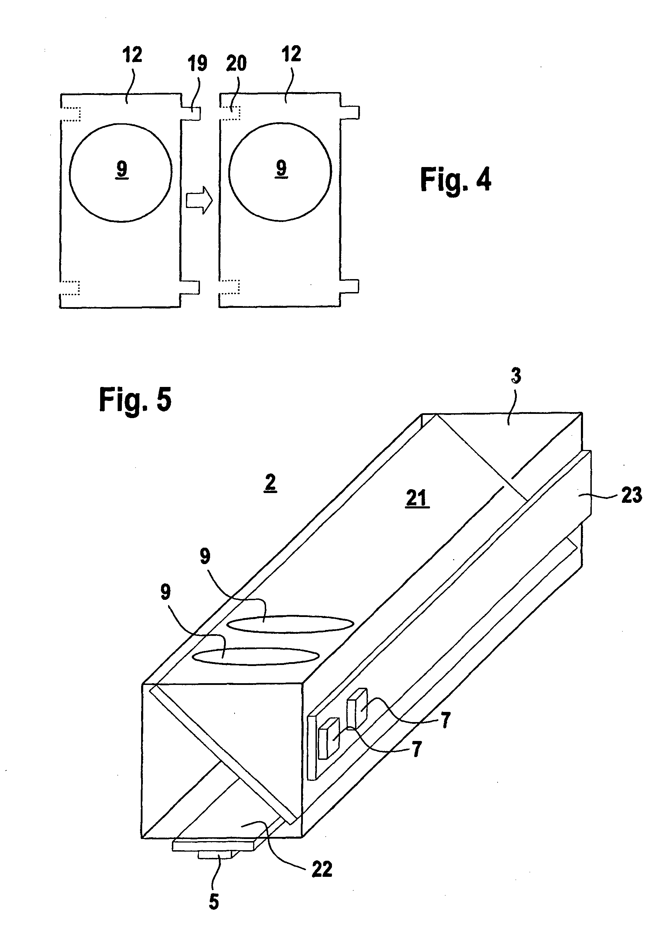

Figur 4 zeigt die Ausbildung von kaskadierbaren Sender-Empfänger-Modulen zur Ausbildung des Lichtvorhangs 1. Ein Sender-Empfänger-Modul besteht im vorliegendem Fall aus einem Optikgehäuse 12 gemäß den Anordnungen der Figuren 2 und 3. Die Optikgehäuse 12 bilden aneinander steckbare Einheiten. Hierzu weisen die Optikgehäuse 12 an einer Seitenwand ausmündende Zapfen 19 und an einer gegenüberliegenden Seitenwand Ausnehmungen 20 auf. Somit können die Zapfen 19 eines Optikgehäuses 12 in die Ausnehmungen 20 eines zweiten Optikgehäuses 12 eingeführt werden. An die so verbundenen Sender-Empfänger-Module werden die Leiterplatten 13, 14 mit den Sendern 5 und Empfängern 7 montiert und dann in das Gehäuse 3 der Sender-Empfänger-Einheit 2 eingebaut.

Figur 5 zeigt eine weitere konstruktive Ausführungsform der Sender-Empfänger-Einheit 2 des Lichtvorhangs 1 gemäß Figur 1. Bei dieser Ausführungsform sind die einzelnen Strahlteiler 8 von einer sich über die gesamte Länge des Gehäuses 3 der Sender-Empfänger-Einheit 2 erstreckenden Strahlteilerplatte 21 gebildet. Weiterhin sind die den Sendern 5 zugeordneten Polarisationsfilter 15 von einer durchgehenden, sich über die gesamte Länge des Gehäuses 3 erstreckenden Polarisationsfilterplatte 22 gebildet. Ebenso sind die den Empfängern 7 zugeordneten Polarisationsfilter 16 von einer durchgehenden, sich über die Länge des Gehäuses 3 erstreckenden Polarisationsfilterplatte 23 gebildet. Die Polarisationsfilterplatten 22, 23 sind dabei dünnwandig ausgebildet, insbesondere in Form von streifenförmigen Folien. Den Polarisationsfilterplatten 22, 23 sind die einzelnen Sender 5 und Empfänger 7 zugeordnet. Weiterhin sind den einzelnen Sender-Empfänger-Paaren einzelne Linsen 9 zugeordnet, wobei diese prinzipiell als durchgehende Linsenplatte ausgebildet sein können.

### Bezugszeichenliste

- (1): Lichtvorhang
- (2): Sender-Empfänger-Einheit
- (3): Gehäuse
- (4): Sendelichtstrahlen
- (5): Sender
- (6): Empfangslichtstrahlen
- (7): Empfänger
- (8): Strahlteiler
- (9): Linse
- (10): Auswerteeinheit
- (11): Reflektor
- (12): Optikgehäuse
- (13): Leiterplatte
- (14): Leiterplatte
- (15): Polarisationsfilter
- (16): Polarisationsfilter
- (17): Umlenkelement
- (18): Optikfalle
- (19): Zapfen
- (20): Ausnehmung
- (21): Strahlteilerplatte
- (22): Polarisationsfilterplatte
- (23): Polarisationsfilterplatte

## Patentansprüche

1. Lichtvorhang zur Erfassung von Objekten in einem Überwachungsbereich, umfassend eine Sender-Empfänger-Einheit (2) an einem Rand des Überwachungsbereichs und einen Reflektor (11) an einem zweiten Rand des Überwachungsbereichs, wobei die Sender-Empfänger-Einheit (2) eine Anordnung von Sender-Empfänger-Paaren mit jeweils einem Sendelichtstrahlen (4) emittierenden Sender (5) und Empfangslichtstrahlen (6) empfangenden Empfänger (7) aufweist, wobei bei freiem Überwachungsbereich die Sendelichtstrahlen (4) jeden Senders (5) auf den Reflektor (11) treffen und von dort als Empfangslichtstrahlen (6) auf den zugeordneten Empfänger (7) geführt sind, und wobei bei einem Objekteingriff im Überwachungsbereich der Strahlengang der Sendelichtstrahlen (4) und Empfangslichtstrahlen (6) wenigstens eines Sender-Empfänger-Paares zumindest teilweise unterbrochen ist, **dadurch gekennzeichnet, dass** die Sendelichtstrahlen (4) und Empfangslichtstrahlen (6) jedes Sender-Empfänger-Paares koaxial im Überwachungsbereich verlaufen, und dass die Sender (5) aller Sender-Empfänger-Paare auf einer Leiterplatte (13) angeordnet sind.

2. Lichtvorhang nach Anspruch 1, **dadurch gekennzeichnet, dass** jedem Sender (5) und Empfänger (7) eines Sender-Empfänger-Paares eine Linse (9) zugeordnet ist, über welche die Sendelichtstrahlen (4) und Empfangslichtstrahlen (6) geführt sind.

3. Lichtvorhang nach einem der Ansprüche 1 oder 2, **dadurch gekennzeichnet, dass** im Strahlengang der Sendelichtstrahlen (4) jedes Senders (5) diesem ein erstes Polarisationsfilter (15, 16) unmittelbar nachgeordnet ist, und dass im Strahlengang der Empfangslichtstrahlen (6) jedes Empfängers (7) diesem ein zweites Polarisationsfilter (15, 16) unmittelbar vorgeordnet ist.

4. Lichtvorhang nach einem der Ansprüche 1 bis 3, **dadurch gekennzeichnet, dass** die Sendelichtstrahlen (4) des Senders (5) und die Empfangslichtstrahlen (6) des Empfängers (7) eines Sender-Empfänger-Paares über einen Strahlteiler (8) geführt sind.

5. Lichtvorhang nach einem der Ansprüche 1 bis 4, **dadurch gekennzeichnet, dass** der Sender (5) und Empfänger (7) eines Sender-Empfänger-Paares auf separaten Leiterplatten (13, 14) angeordnet sind.

6. Lichtvorhang nach einem der Ansprüche 1 bis 5, **dadurch gekennzeichnet, dass** der Sender (5) und Empfänger (7) eines Sender-Empfänger-Paares auf einer gemeinsamen Leiterplatte (13, 14) angeordnet sind.

7. Lichtvorhang nach einem der Ansprüche 1 bis 6, **dadurch gekennzeichnet, dass** der Sender (5) und Empfänger (7) eines Sender-Empfänger-Paares Bestandteile eines Sender-Empfänger-Moduls sind, wobei die Sender-Empfänger-Module kaskadierbare Einheiten bilden.

8. Lichtvorhang nach einem der Ansprüche 1 bis 7, **dadurch gekennzeichnet, dass** jedem Sender-Empfänger-Paar ein Sender-Empfänger-Modul zugeordnet ist, welches dem Sender (5) und Empfänger (7) des Sender-Empfänger-Paares zugeordnete Optikelemente enthält.

9. Lichtvorhang nach einem der Ansprüche 7 oder 8, **dadurch gekennzeichnet, dass** die Sender-Empfänger-Module aneinander streckbare Einheiten bilden.

10. Lichtvorhang nach einem der Ansprüche 7 bis 9, **dadurch gekennzeichnet, dass** übergreifende Elektronikeinheiten, an welche die Sender (5) und Empfänger (7) aller Sender-Empfänger-Module anschließbar sind, vorgesehen sind.

11. Lichtvorhang nach einem der Ansprüche 7 bis 9, **dadurch gekennzeichnet, dass** die Sender-Empfänger-Module über eine Bandleitung elektrisch verbunden sind.

12. Lichtvorhang nach einem der Ansprüche 3 bis 11, **dadurch gekennzeichnet, dass** die den Sendern (5) zugeordneten ersten Polarisationsfilter (15) und die den Empfängern (7) zugeordneten Polarisationsfilter (16) jeweils Bestandteil einer Polarisationsfilterplatte (22, 23) sind.

13. Lichtvorhang nach einem der Ansprüche 4 bis 12, **dadurch gekennzeichnet, dass** die den Sendern (5) und Empfängern (7) des Sender-Empfänger-Paares zugeordneten Strahlteiler (8) Bestandteile einer Strahlteilerplatte (21) sind.

14. Lichtvorhang nach einem der Ansprüche 1 bis 13, **dadurch gekennzeichnet, dass** dessen Sender-Empfänger-Paare zyklisch einzeln nacheinander aktiviert sind.

15. Lichtvorhang nach einem der Ansprüche 1 bis 14, **dadurch gekennzeichnet, dass** zumindest ein Teil der Sender-Empfänger-Paare parallel aktivierbar ist.

## Claims

1. Light curtain for detecting objects in a monitoring region, comprising a transmitter/receiver unit (2) at one edge of the monitoring region and a reflector (11) at a second edge of the monitoring region, wherein the transmitter/receiver unit (2) comprises an arrangement of transmitter/receiver pairs each with a respective transmitter (5) emitting transmitted light beams (4) and receiver (7) receiving received light beams (6), wherein when the monitoring region is free the transmitted light beams (4) of each transmitter (5) are incident on the reflector (11) and are guided from there as received light beams (6) to the associated receiver (7) and wherein when an object enters the monitoring region the beam path of the transmitted light beams (4) and received light beams (6) of at least one transmitter/receiver pair is at least partly interrupted, **characterised in that** the transmitted light beams (4) and received light beams (6) of each transmitter/receiver pair run coaxially in the monitoring region and that the transmitters (5) of all transmitter/receiver pairs are arranged on one circuitboard (13).

2. Light curtain according to claim 1, **characterised in that** a lens (9) by way of which the transmitted light beams (4) and received light beams (6) are guided is associated with each transmitter (5) and receiver (7) of a transmitter/receiver pair.

3. Light curtain according one of claims 1 and 2, **characterised in that** a first polarisation filter (15, 16) is arranged in the beam path of the transmitted light beams (4) of each transmitter (5) directly downstream thereof and that a second polarisation filter (15, 16) is arranged in the beam path of the received light beams (6) of each receiver (7) directly upstream thereof.

4. Light curtain according to any one of claims 1 to 3, **characterised in that** the transmitted light beams (4) of the transmitter (5) and the received light beams (6) of the receiver (7) of a transmitter/receiver pair are guided by way of a beam splitter (8).

5. Light curtain according to any one of claims 1 to 4, **characterised in that** the transmitter (5) and receiver (7) of a transmitter/receiver pair are arranged on separate circuitboards (13, 14).

6. Light curtain according to any one of claims 1 to 5, **characterised in that** the transmitter (5) and receiver (7) of a transmitter/receiver pair are arranged on a common circuitboard (13, 14).

7. Light curtain according to any one of claims 1 to 6, **characterised in that** the transmitter (5) and receiver (7) of a transmitter/receiver pair are components of a transmitter/receiver module, wherein the transmitter/receiver modules form units which can be cascaded.

8. Light curtain according to any one of claims 1 to 7, **characterised in that** a respective transmitter/receiver module is associated with each transmitter/receiver pair and includes the optical elements associated with the transmitter (5) and receiver (7) of the transmitter/receiver pair.

9. Light curtain according to one of claims 7 and 8, **characterised in that** the transmitter/receiver modules form units which can be plugged to one another.

10. Light curtain according to any one of claims 7 to 9, **characterised in that** superordinate electronic units with which the transmitters (5) and receivers (7) of all transmitter/receiver modules are connectible are provided.

11. Light curtain according to any one of claims 7 to 9, **characterised in that** the transmitter/receiver modules are electrically connected by way of a strip conductor.

12. Light curtain according to any one of claims 3 to 11, **characterised in that** the first polarisation filter (15) associated with the transmitters (5) and the polarisation filter (16) associated with the receivers (7) are each a component of a polarisation filter plate (22, 23).

13. Light curtain according to any one of claims 4 to 12, **characterised in that** the beam splitters (8) associated with the transmitters (5) and receivers (7) of the transmitter/receiver pair are components of a beam splitter plate (21).

14. Light curtain according to any one of claims 1 to 13, **characterised in that** the transmitter/receiver pairs thereof are individually cyclically activated in succession.

15. Light curtain according to any one of claims 1 to 14, **characterised in that** at least a part of the transmitter/receiver pairs is activatable in parallel.

## Revendications

1. Rideau photoélectrique pour détecter des objets dans une zone de surveillance, comprenant une unité d'émetteurs-récepteurs (2) à un bord de la zone de surveillance et un réflecteur (11) à un deuxième bord de la zone de surveillance, l'unité d'émetteurs-récepteurs (2) comportant un agencement de paires émetteur-récepteur comprenant chacune un émetteur (5) émettant des rayons lumineux d'émission (4) et un récepteur (7) recevant des rayons lumineux de réception (6), les rayons lumineux d'émission (4) de chaque émetteur (5) rencontrant le réflecteur (11) et étant guidés par celui-ci sur le récepteur (7) associé en tant que rayons lumineux de réception (6) lorsque la zone de surveillance est libre, et le chemin optique des rayons lumineux d'émission (4) et des rayons lumineux de réception (6) d'au moins une paire émetteur-récepteur étant interrompu au moins partiellement en cas d'intrusion d'un objet dans la zone de surveillance, **caractérisé en ce que** les rayons lumineux d'émission (4) et les rayons lumineux de réception (6) de chaque paire émetteur-récepteur sont coaxiaux dans la zone de surveillance et **en ce que** les émetteurs (5) de toutes les paires émetteur-récepteur sont disposés sur une carte de circuit imprimé (13).

2. Rideau photoélectrique selon la revendication 1, **caractérisé en ce qu'**une lentille (9), via laquelle les rayons lumineux d'émission (4) et les rayons lumineux de réception (6) sont guidés, est associée à chaque émetteur (5) et récepteur (7) d'une paire émetteur-récepteur.

3. Rideau photoélectrique selon une des revendications 1 ou 2, **caractérisé en ce qu'**un premier filtre polarisant (15, 16) est disposé immédiatement après chaque émetteur (5) dans le chemin optique des rayons lumineux d'émission (4) de celui-ci, et qu'un deuxième filtre polarisant (15, 16) est disposé immédiatement avant chaque récepteur (7) dans le chemin optique des rayons lumineux de réception (6) de celui-ci.

4. Rideau photoélectrique selon une des revendications 1 à 3, **caractérisé en ce que** les rayons lumineux d'émission (4) de l'émetteur (5) et les rayons lumineux de réception (6) du récepteur (7) d'une paire émetteur-récepteur sont guidés via un diviseur de faisceau (8).

5. Rideau photoélectrique selon une des revendications 1 à 4, **caractérisé en ce que** l'émetteur (5) et le récepteur (7) d'une paire émetteur-récepteur sont disposés sur des cartes de circuit imprimé (13, 14) séparées.

6. Rideau photoélectrique selon une des revendications 1 à 5, **caractérisé en ce que** l'émetteur (5) et le récepteur (7) d'une paire émetteur-récepteur sont disposés sur une carte de circuit imprimé (13, 14) commune.

7. Rideau photoélectrique selon une des revendications 1 à 6, **caractérisé en ce que** l'émetteur (5) et le récepteur (7) d'une paire émetteur-récepteur sont des composants d'un module émetteur-récepteur, les modules émetteur-récepteur formant des unités pouvant être montées en cascade.

8. Rideau photoélectrique selon une des revendications 1 à 7, **caractérisé en ce qu'**un module émetteur-récepteur est associé à chaque paire émetteur-récepteur, lequel contient des éléments optiques associés à l'émetteur (5) et au récepteur (7) de la paire émetteur-récepteur.

9. Rideau photoélectrique selon une des revendications 7 ou 8, **caractérisé en ce que** les modules émetteur-récepteur forment des unités enfichables les unes avec les autres.

10. Rideau photoélectrique selon une des revendications 7 à 9, **caractérisé en ce que** des unités électroniques transversales, auxquelles les émetteurs (5) et récepteurs (7) de tous les modules émetteur-récepteur peuvent être connectés, sont prévues.

11. Rideau photoélectrique selon une des revendications 7 à 9, **caractérisé en ce que** les modules émetteur-récepteur sont reliés électriquement par un câble plat.

12. Rideau photoélectrique selon une des revendications 3 à 11, **caractérisé en ce que** les premiers filtres polarisants (15) associés aux émetteurs (5) et les filtres polarisants (16) associés aux récepteurs (7) sont chaque fois un composant d'une carte de filtres polarisants (22, 23).

13. Rideau photoélectrique selon une des revendications 4 à 12, **caractérisé en ce que** les diviseurs de faisceau (8) associés aux émetteurs (5) et récepteurs (7) de la paire émetteur-récepteur sont des composants d'une carte de diviseurs de faisceau (21).

14. Rideau photoélectrique selon une des revendications 1 à 13, **caractérisé en ce que** ses paires émetteur-récepteur sont activées individuellement l'une après l'autre de manière cyclique.

15. Rideau photoélectrique selon une des revendications 1 à 14, **caractérisé en ce qu'**au moins une partie des paires émetteur-récepteur est activable en parallèle.
